# EUROPEAN PATENT APPLICATION

(11) **EP 4 826 858 A1**
(43) Date of publication of application: **21.10.2026**
(21) Application number: 26163807.6
(22) Date of filing: 10.03.2026
(51) Int. Cl.: H01M 50/103, H01M 50/15, H01M 50/342

(54) **SECONDARY BATTERY**

(30) Priority: 12.03.2025 KR 20250032240
(71) Applicant: SK On Co., Ltd., Seoul 03161 (KR)
(72) Inventor: CHEONG, Hoemin, 34124 Daejeon (KR); KWAK, Seung Ho, 34124 Daejeon (KR); JU, Seung Hoon, 34124 Daejeon (KR); PAK, Byeong Jun, 34124 Daejeon (KR); LEE, Dong Hyee, 34124 Daejeon (KR)
(74) Representative: Prüfer & Partner mbB Patentanwälte · Rechtsanwälte

(57) **Abstract**

Disclosed is a secondary battery including: a case open on at least one of a first side or a second side and including an accommodating space formed therein; an electrode assembly accommodated in the accommodating space and including a positive electrode, a negative electrode, and a separator disposed between the positive electrode and the negative electrode; and a cap assembly coupled to the case to seal the accommodating space, and including a positive electrode terminal electrically connected to the positive electrode, and a negative electrode terminal electrically connected to the negative electrode, wherein a vent hole is formed in the case or the cap assembly, and a vent, which is configured to rupture upon a pressure in the accommodating space exceeding a predetermined reference pressure, is coupled to the vent hole.

## Description

### BACKGROUND OF THE INVENTION

### 1. Field

The present disclosure relates to a secondary battery and, particularly, to a secondary battery with a vent that can be ruptured to have a required opening area.

### 2. Description of the Related Art

Among battery cells, secondary cells that can be charged and discharged are used in small and portable electronic devices such as cell phones and camcorders, or a plurality of secondary cells are connected to serve as a power source for driving motors in hybrid vehicles.

These secondary batteries are manufactured in a variety of shapes, including rigid prismatic or cylindrical shapes or flexible pouch shapes.

Meanwhile, due to the characteristics of products to which secondary batteries are applied, safety requirements are increasing. In particular, in the case of electric vehicles provided with multiple secondary batteries, it is necessary to prevent a fire from one secondary battery from spreading to neighboring secondary batteries, causing a chain reaction and thermal runaway.

To prevent such thermal runaway, secondary batteries may have vents. The vent is formed by a plate-shaped member that closes a hole formed in a case of the secondary battery, and when the pressure inside the secondary battery becomes higher than a preset pressure, the plate-shaped member ruptures to form an opening through which gas inside the secondary battery is discharged to the outside

On the other hand, in order to effectively discharge the gas inside the secondary battery, the opening formed by the rupture of the vent needs to have a required area, but as the plate-shaped member bends during the rupture of the vent, the opening may have a smaller size than the required size.

As such, if the opening formed by the rupture of the vent has a smaller size than the required size, it may not be possible to effectively discharge the gas inside the secondary battery to the outside, and it may not be possible to effectively prevent a fire in the secondary battery or the thermal runaway of the secondary battery

Therefore, it is necessary to develop a secondary battery having a vent that can be ruptured so that an opening formed when the vent is ruptured can have the required size.

### SUMMARY OF THE INVENTION

An aspect of the present disclosure is to provide a secondary battery including a vent that can be ruptured to form an opening having a required size.

Another aspect of the present disclosure is to provide a secondary battery that can effectively prevent the occurrence of a fire.

The secondary battery of the present disclosure can be widely applied in the field of green technologies utilizing batteries, such as electric vehicles. Furthermore, the secondary battery of the present disclosure can be used in eco-friendly electric vehicles, hybrid vehicles, etc. to mitigate climate change by suppressing air pollution and greenhouse gas emissions.

According to an embodiment of the disclosure, a secondary battery includes: a case open on at least one of a first side or a second side and including an accommodating space formed therein; an electrode assembly accommodated in the accommodating space and including a positive electrode, a negative electrode, and a separator disposed between the positive electrode and the negative electrode; and a cap assembly coupled to the case to seal the accommodating space, and including a positive electrode terminal electrically connected to the positive electrode, and a negative electrode terminal electrically connected to the negative electrode, wherein a vent hole is formed in the case or the cap assembly, and a vent, which is configured to rupture upon a pressure in the accommodating space exceeding a predetermined reference pressure, is coupled to the vent hole, the vent including: a notch formed by forming a groove having a first shape on at least a portion of a first surface facing the accommodating space or a second surface opposite to the first surface; and an anti-bending portion formed by being recessed such that at least a portion of the second surface has a second shape.

According to another embodiment of the disclosure, a secondary battery includes a case open on a first side and a second side and including an accommodating space formed therein; an electrode assembly accommodated in the accommodating space and including a positive electrode, a negative electrode, and a separator disposed between the positive electrode and the negative electrode; a first cap assembly coupled to the first side of the case and including a positive electrode terminal electrically connected to the positive electrode; and a second cap assembly coupled to the second side of the case and including a negative electrode terminal electrically connected to the negative electrode, wherein a vent hole is formed in the case, the first cap assembly or the second cap assembly, and a vent, which is configured to rupture upon a pressure in the accommodating space exceeding a predetermined reference pressure, is coupled to the vent hole, the vent including: a notch formed by forming a groove having a first shape on at least a portion of a first surface facing the accommodating space or a second surface opposite to the first surface; and an anti-bending portion formed by being recessed such that at least a portion of the second surface has a second shape.

Further, the vent may be formed extending in a longitudinal direction, the notch may include a first groove formed extending in a direction parallel to the longitudinal direction, and the first groove may be formed to pass through the center of the vent, which is midway between a first longitudinal end and a second longitudinal end of the vent, and midway between a first transverse end and a second transverse end of the vent.

Further, the anti-bending portion may include a first embossed portion formed between the first groove and the first transverse end of the vent; and a second embossed portion formed between the first groove and the second transverse end of the vent.

Further, the first embossed portion may include: a first inclined surface that has a first side connected to the second surface of the vent and is positioned adjacent to the first groove; and a second inclined surface that has a first side connected to a second side of the first inclined surface and a second side connected to the second surface of the vent and is positioned farther from the first groove than the first inclined surface, and the second embossed portion may include a third inclined surface that has a first side connected to the second surface of the vent and is positioned adjacent to the first groove; and a fourth inclined surface that has a first side connected to the third inclined surface and a second side connected to the second surface of the vent and is positioned farther from the first groove than the third inclined surface.

Further, a distance between the first side and the second side of the first inclined surface may be different from a distance between the first side and the second side of the second inclined surface, and a distance between the first side and the second side of the third inclined surface may be different from a distance between the first side and the second side of the fourth inclined surface.

Further, an angle formed between the first inclined surface and a plane parallel to the second surface of the vent or an angle formed between the second inclined surface and the plane may be 90 degrees, and an angle formed between the third inclined surface and the plane or an angle formed between the fourth inclined surface and the plane may be 90 degrees.

Further, the first embossed portion and the second embossed portion may be formed to be parallel to the first groove.

Further, the first embossed portion may be formed such that, among transverse distances between the first embossed portion and the first groove, a transverse distance between the first embossed portion and the center of the vent is the shortest, and the second embossed portion may be formed such that, among transverse distances between the second embossed portion and the first groove, a transverse distance between the second embossed portion and the center of the vent is the shortest.

Further, the first embossed portion may be formed such that the transverse distance between the first embossed portion and the first groove increases from the center of the vent toward the first longitudinal end and the second longitudinal end of the vent, and the second embossed portion may be formed such that the transverse distance between the second embossed portion and the first groove increases from the center of the vent toward the first longitudinal end and the second longitudinal end of the vent.

The notch further may include: a second groove formed adjacent to an outer periphery of the first longitudinal end of the vent; and a third groove formed adjacent to an outer periphery of the second longitudinal end of the vent.

The second groove may be connected to the first groove and formed parallel to the outer periphery of the first longitudinal end of the vent, and the third groove may be connected to the first groove and formed parallel to the outer periphery of the second longitudinal end of the vent.

The first embossed portion may be formed such that the shortest distance between the first transverse end of the vent and the second groove is equal to the shortest distance between the first transverse end of the vent and the first longitudinal end of the first embossed portion, the first embossed portion may be formed such that the shortest distance between the first transverse end of the vent and the third groove is equal to the shortest distance between the first transverse end of the vent and the second longitudinal end of the first embossed portion, the second embossed portion may be formed such that the shortest distance between the second transverse end of the vent and the second groove is equal to the shortest distance between the second transverse end of the vent and the first longitudinal end of the second embossed portion, and the second embossed portion may be formed such that the shortest distance between the second transverse end of the vent and the third groove is equal to the shortest distance between the second transverse end of the vent and the second longitudinal end of the second embossed portion.

The first embossed portion and the second embossed portion may be formed to be symmetrical to each other with respect to the first groove, and the second groove and the third groove may be formed to be symmetrical to each other with respect to the center of the vent.

Specific details of other embodiments for solving the foregoing problems are included in the detailed description and the accompanying drawings.

According to an embodiment of the present disclosure, a secondary battery includes an anti-bending portion to prevent a vent from bending when the vent is ruptured to form an opening for discharging gas, thereby providing an effect of allowing the opening for the gas discharge to be formed to have a required size.

Furthermore, the gas can be effectively discharged, thereby providing an effect of reliably preventing the occurrence of a fire.

### BRIEF DESCRIPTION OF THE DRAWINGS

FIG. 1 is a perspective view of a secondary battery according to an embodiment of the present disclosure.
FIG. 2 is a cross-sectional view of the secondary battery.
FIG. 3 is a plan view of a vent.
FIG. 4 is a plan view of a vent including a second groove and a third groove formed parallel to the outer periphery of the vent.
FIG. 5 is a longitudinal cross-sectional view of a vent including an embossed portion with an inclined surface.
FIG. 6 is a graph showing the relative values of the bending moment of the embossed portion along the length of the inclined surface.
FIG. 7 is a longitudinal cross-sectional view of a vent including an embossed portion with an inclined surface formed at an angle of 90 degrees to a plane parallel to a second surface of the vent.
FIG. 8 is a graph showing the relative values of the bending moment of the embossed portion according to angles formed between the inclined surface and a plane parallel to a second surface of the vent.
FIG. 9 is a plan view of a vent including an embossed portion formed such that a distance from a first groove increases with increasing distance from the center of the vent.
FIG. 10 is a perspective view of a secondary battery according to another embodiment of the present disclosure.

### DETAILED DESCRIPTION

Below, with reference to the accompanying drawings, embodiments of the present disclosure will be described in detail so as to facilitate practice by those having ordinary knowledge in the technical field to which the present disclosure belongs. However, the present disclosure may be implemented in various other forms and is not limited to the embodiments described herein. In order to clearly describe the present disclosure in the drawings, portions not pertinent to the description at have been omitted, and like parts throughout the specification are designated by like reference numerals.

Throughout the specification, when an element is said to be "connected" to another element, this includes not only a case of being "directly connected" but also a case of being "electrically connected" with another element interposed therebetween.

Throughout the specification, when one element is said to be "on" another element, this includes not only when the one element is in contact with the other element, but also when one or more intervening elements are present between the one element and the other element.

Throughout the specification, whenever an element is said to "include" a component, it is intended to mean that the element may further include other components rather than excluding other components, unless specifically indicated to the contrary. As used throughout the specification, the terms "about," "substantially," and the like are used to refer to values at or near the stated numerical value in view of manufacturing and material tolerances inherent in the recited values, and are used for the purpose of clarity and to prevent unscrupulous infringers from taking unfair advantage of the disclosure where precise or absolute numerical values are recited. As used throughout the specification, the terms "a step that ......" or "a step of ......" do not mean "a step for ......"

Hereinafter, preferred embodiments of the present disclosure will be described in detail below with reference to the accompanying drawings and the following description. However, the present disclosure is not limited to the embodiments described herein and may be embodied in other forms. Throughout the specification, like reference numerals denote like elements.

Below, a secondary battery according to an embodiment of the present disclosure will be described.

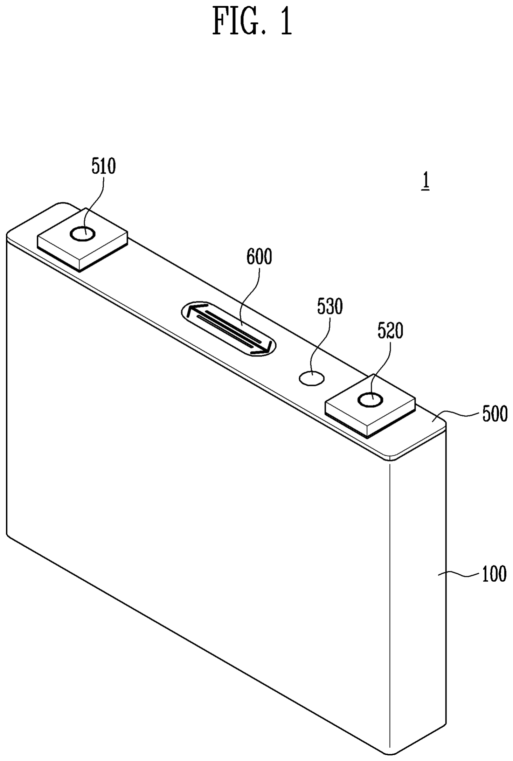

FIG. 1 is a perspective view of a secondary battery according to an embodiment of the present disclosure.

Referring to FIG. 1, a secondary battery 1 includes a case 100, a cap assembly 500, and a vent 600.

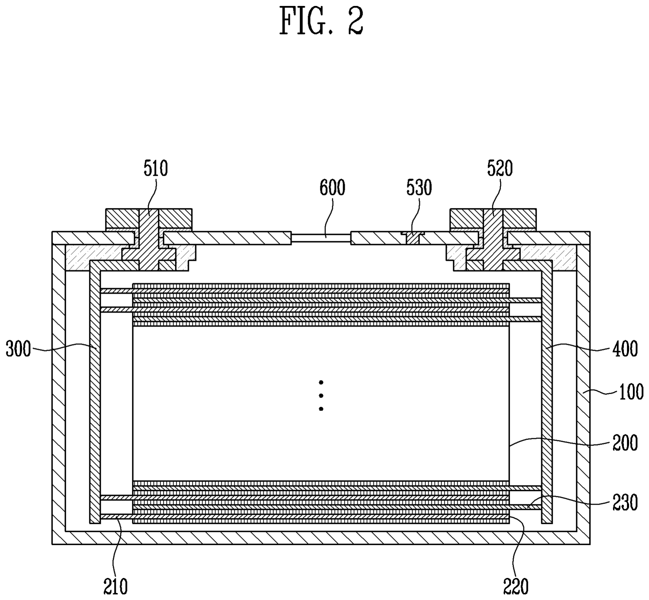

FIG. 2 is a cross-sectional view of the secondary battery.

Referring to FIG. 2, the secondary battery 1 further includes an electrode assembly 200, a positive electrode plate 300, and a negative electrode plate 400.

First, the case 100 will be described.

Referring to FIG. 2, the case 100 may be open on at least one of a first side or a second side and may have an accommodating space formed therein.

In addition, a vent hole may be formed in the case 100 or a cap assembly 500.

The case 100 may form the outer appearance of the secondary battery 1 and may be shaped like a prism, a pouch, a cylinder, or the like, but the configuration of the case 100 is not limited thereto.

Next, the electrode assembly 200 will be described.

The electrode assembly 200 may be accommodated in the accommodating space and may include a positive electrode 210, a negative electrode 230, and a separator 220 disposed between the positive electrode 210 and the negative electrode 230.

The positive electrode 210 may be formed by applying a positive electrode active material, such as a transition metal oxide, to a positive electrode collector formed as a foil of metal such as aluminum.

The positive electrode 210 also includes a positive electrode uncoated portion, which is an area where no positive electrode active material is applied, and which can be a path for current flow between the positive electrode and the outside and can also form a positive electrode tab.

The negative electrode 230 may be formed by applying a negative electrode active material, such as graphite or carbon, to a negative electrode collector formed as a foil of metal such as copper or nickel.

The negative electrode 230 includes a negative electrode uncoated portion, which is an area where no negative electrode active material is applied, and which can be a path for current flow between the negative electrode 230 and the outside and can also form a negative electrode tab.

The separator 220 may be positioned between the positive electrode 210 and the negative electrode 230 to prevent short circuits and allow for the movement of lithium ions. The separator 220 may be made of polyethylene, polypropylene, or a composite film of polyethylene and polypropylene.

The plurality of positive electrodes 210 and the plurality of negative electrodes 230 formed as described above may be alternately stacked with the separator 220 interposed therebetween to form the electrode assembly 200, and the electrode assembly 200 may be accommodated in the accommodating space of the case 100 together with an electrolyte.

Next, the positive electrode plate 300 will be described.

Referring to FIG. 2, the positive electrode plate 300 may be electrically connected to the positive electrode 210.

Specifically, the positive electrode plate 300 may be electrically connected to the positive electrode uncoated portion or the positive electrode tab of the positive electrode 210. In this case, the positive electrode plate 300 may be made of copper or a copper alloy, but the configuration of the positive electrode plate 300 is not limited thereto.

Next, the negative electrode plate 400 will be described.

Referring to FIG. 2, the negative electrode plate 400 may be electrically connected to the negative electrode 230.

Specifically, the negative electrode plate 400 may be electrically connected to the negative electrode uncoated portion or the negative electrode tab of the negative electrode 230. In this case, the negative electrode plate 400 may be made of aluminum or an aluminum alloy, but the configuration of the negative electrode plate 400 is not limited thereto.

Next, the cap assembly 500 will be described.

Referring to FIG. 2, the cap assembly 500 may be coupled to the case 100 to seal the accommodating space, may include a positive electrode terminal 510 electrically connected to the positive electrode 210, a negative electrode terminal 520 electrically connected to the negative electrode 230, and a vent hole formed therein.

Although at least one vent hole may be formed in the case 100 or the cap assembly 500, it is preferred that a single vent hole be formed in the secondary battery 1.

Specifically, when the vent hole is formed in the cap assembly 500, no vent hole may be formed in the case 100. On the other hand, the vent hole is formed in the case 100, no vent hole may be formed in the cap assembly 500. In other words, the vent hole may be formed in the case 100 or the cap assembly 500.

The positive electrode terminal 510 may be formed of metal and may be electrically connected to the positive electrode plate 300.

As such, when the positive electrode terminal 510 is electrically connected to the positive electrode plate 300, the positive electrode terminal 510 may be electrically connected to the positive electrode 210.

The negative electrode terminal 520 may be formed of metal and may be electrically connected to the negative electrode plate 400.

As such, when the negative electrode terminal 520 is electrically connected to the negative electrode plate 400, the negative electrode terminal 520 may be electrically connected to the negative electrode 230.

The vent hole refers to a hole that may be configured to provide communication between the accommodating space and the outside of the accommodating space.

The vent 600 (to be described later) may be coupled to the vent hole to seal the accommodating space.

Meanwhile, the cap assembly 500 may have an inlet 530 formed for injecting electrolyte into the accommodating space, and the inlet 530 may be coupled with a plug or the like to seal the accommodating space.

Next, the vent 600 will be described.

Referring to FIG. 2, the vent 600 may be a member that closes the vent hole formed in the case 100 of the secondary battery 1, may be coupled to the vent hole, and may be ruptured when the pressure in the accommodating space becomes greater than a predetermined reference pressure.

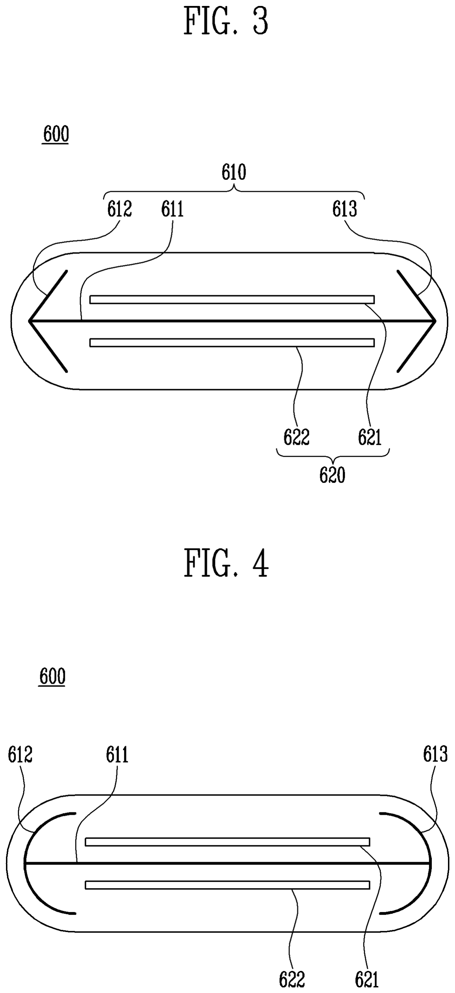

FIG. 3 is a plan view of a vent.

The vent 600, as shown in FIG. 3, may include a notch 610 and an anti-bending portion 620.

The notch 610 may function to rupture and open the vent 600 when the vent 600 is subjected to pressure from the accommodating space.

The notch 610 may be formed by forming a groove having a first shape on at least a portion of a first surface of the vent 600 facing the accommodating space or a second surface opposite to the first surface.

For example, as shown in FIG. 3, the notch 610 may include a first groove 611, a second groove 612, and a third groove 613 formed on the second surface of the vent 600.

Specifically, the vent 600 may be formed extending in a longitudinal direction, and the notch 610 may include a first groove 611 extending in a direction parallel to the longitudinal direction.

The first groove 611 may include a recess in which at least a portion of the surface of the vent 600 is depressed, and may be configured to rupture when a predetermined amount of force is applied.

In this case, the first groove 611 may be formed in the vent 600 such that the vent 600 can more effectively rupture when pressure is applied from the accommodating space.

For example, the first groove 611 may be formed to pass through the center of the vent 600, which is midway between a first longitudinal end and a second longitudinal end of the vent 600, and midway between a first transverse end and a second transverse end of the vent 600. The first longitudinal end and the second longitudinal end of the vent 600 may respectively correspond to one end of the vent 600 in the longitudinal direction and the other end of the vent 600 in the longitudinal direction, and the first transverse end and the second transverse end of the vent may respectively correspond to one end of the vent 600 in a direction perpendicular to the longitudinal direction and the other end of the vent 600 in the direction perpendicular to the longitudinal direction.

That is, the first groove 611 may be formed to pass through the center of the vent 600.

The second groove 612 may include a recess in which at least a portion of the surface of the vent 600 is depressed, and may be configured to rupture when a predetermined amount of force is applied.

The second groove 612 may rupture in conjunction with the first groove 611, and may be formed adjacent to the outer periphery of the first longitudinal end of the vent 600, as shown in FIG. 3.

In this case, the second groove 612 can be formed in the vent 600 so as to be easily ruptured together with the first groove 611 when the first groove 611 ruptures under pressure from the accommodating space.

FIG. 4 is a plan view of a vent including a second groove and a third groove formed parallel to the outer periphery of the vent.

For example, as shown in FIG. 4, the second groove 612 may be connected to the first groove 611 and formed parallel to the outer periphery of the first longitudinal end of the vent 600.

The third groove 613 may include a recess in which at least a portion of the surface of the vent 600 is depressed, and may be configured to rupture upon application of a predetermined amount of force.

The third groove 613 may rupture in conjunction with the first groove 611, and may be formed adjacent to the outer periphery of the second longitudinal end of the vent 600, as shown in FIG. 3.

In this case, the third groove 613 may be formed in the vent 600 so as to be easily ruptured together with the first groove 611 when the first groove 611 ruptures under pressure from the accommodating space.

By way of illustration, as shown in FIG. 4, the third groove 613 may be connected to the first groove 611 and formed parallel to the outer periphery of the second longitudinal end of the vent 600.

The anti-bending portion 620 may function to prevent the vent 600 from bending when the notch 610 is ruptured to open the vent 600.

The anti-bending portion 620 may be formed by recessing at least a portion of the second surface of the vent 600 to have a second shape.

The anti-bending portion 620 may include a first embossed portion 621 and a second embossed portion 622, as shown in FIG. 3.

The first embossed portion 621 will be described next.

The first embossed portion 621 may be formed between the first groove 611 and the first transverse end of the vent 600.

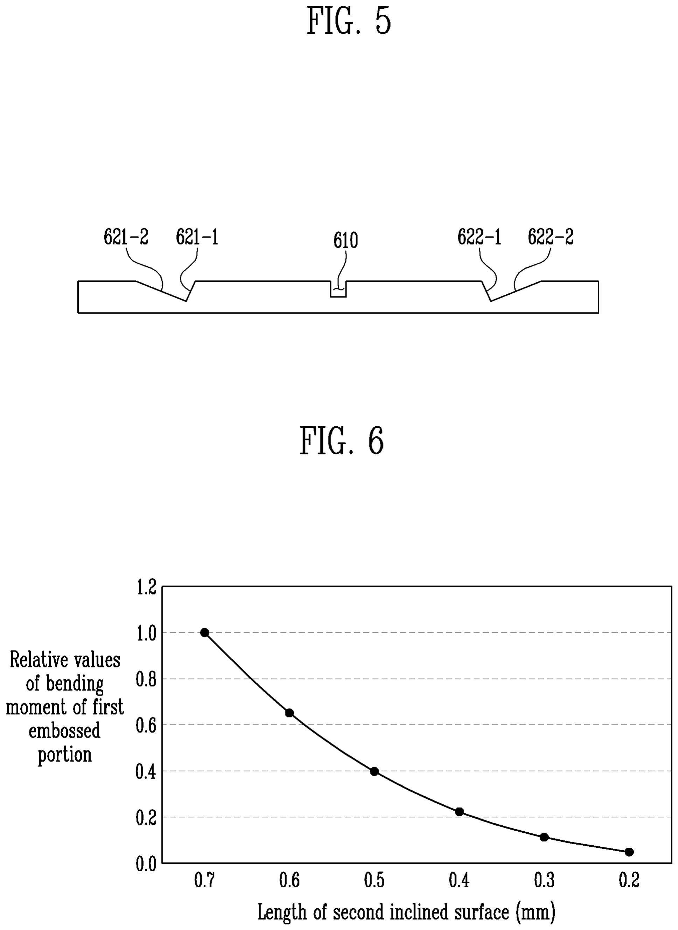

FIG. 5 is a longitudinal cross-sectional view of a vent including an embossed portion with an inclined surface.

As shown in FIG. 5, the first embossed portion 621 may include a first inclined surface 621-1 that has a first side connected to the second surface of the vent 600 and is positioned adjacent to the first groove 611, and a second inclined surface 621-2 that has a first side connected to a second side of the first inclined surface 621-1 and a second side connected to the second surface of the vent 600 and is positioned farther from the first groove 611 than the first inclined surface 621-1.

In this case, the first inclined surface 621-1 and the second inclined surface 621-2 of the first embossed portion 621 may be formed to effectively prevent the first embossed portion 621 from bending, thereby effectively preventing the vent 600 from bending.

Specifically, the first inclined surface 621-1 and the second inclined surface 621-2 may be formed such that a distance between the first side and the second side of the first inclined surface 621-1 is different from a distance between the first side and the second side of the second inclined surface 621-2.

In other words, the first embossed portion 621 may be formed such that the two sides thereof are not symmetrical to each other with respect to the grooves.

FIG. 6 is a graph showing the relative values of the bending moment of the embossed portion along the length of the inclined surface.

The graph in FIG. 6 shows the results of measuring the relative value of the bending moment of the first embossed portion 621 while the length of the second inclined surface 621-2 varies between 0.2 mm and 0.7 mm, given that the length of the first inclined surface 621-1 is 0.2 mm.

As shown in the graph of FIG. 6, the bending moment of the first embossed portion 621 increases when the lengths of the first inclined surface 621-1 and the second inclined surface 621-2 are different, compared to a case where the lengths of the first inclined surface 621-1 and the second inclined surface 621-2 are the same.

In other words, the bending moment of the first embossed portion 621 increases when the lengths of the first inclined surface 621-1 and the second inclined surface 621-2 are different, so that the vent 600 including the first embossed portion 621 can be effectively prevented from bending.

Additionally, the first inclined surface 621-1 and the second inclined surface 621-2 of the first embossed portion 621 may be formed to more effectively prevent the first embossed portion 621 from bending, thereby more effectively preventing the vent 600 from bending.

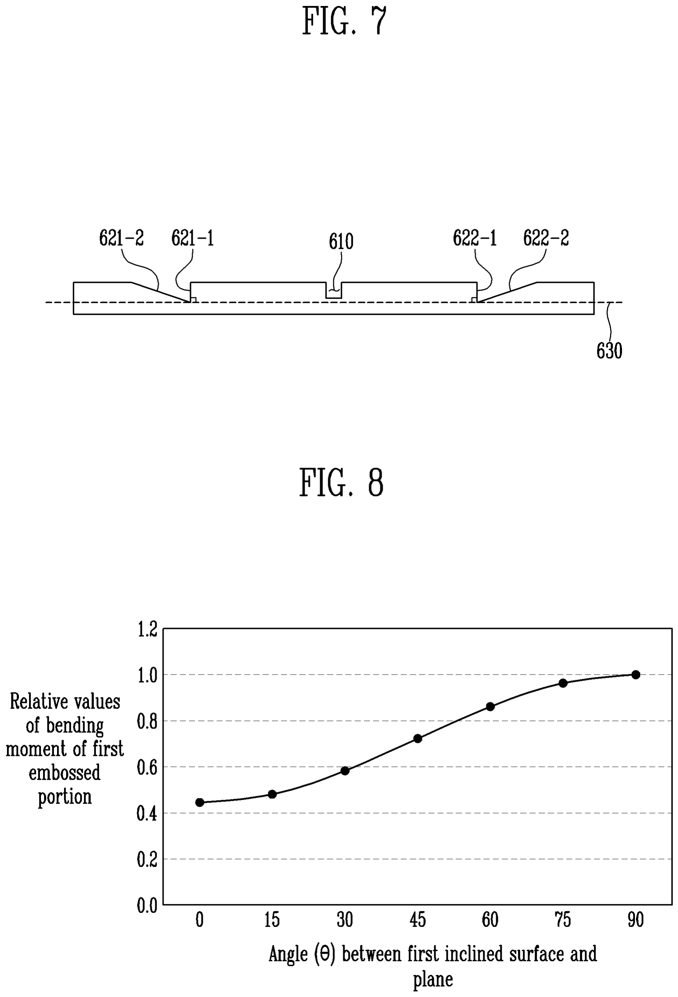

FIG. 7 is a longitudinal cross-sectional view of a vent including an embossed portion with an inclined surface formed at an angle of 90 degrees to a plane parallel to a second surface of the vent.

Specifically, as shown in FIG. 7, the first inclined surface 621-1 and the second inclined surface 621-2 may be formed such that an angle formed between the first inclined surface 621-1 and a plane 630 parallel to the second surface of the vent 600 or an angle formed between the second inclined surface 621-2 and the plane 630 is 90 degrees.

In other words, the first inclined surface 621-1 and the second inclined surface 621-2 may have different lengths from each other, but may be formed such that an angle formed between either one thereof and the plane 630 is a right angle.

FIG. 8 is a graph showing the relative values of the bending moment of the embossed portion according to angles formed between the inclined surface and a plane parallel to a second surface of the vent.

The graph in FIG. 8 illustrates the results of measuring the relative value of the bending moment of the first embossed portion 621, while the angle formed between the first inclined surface 621-1 and the plane 630 varies, given that the lengths of the first inclined surface 621-1 and the second inclined surface 621-2 are different from each other.

As shown in the graph of FIG. 8, the bending moment of the first embossed portion 621 increases as the angle formed between the first inclined surface 621-1 and the plane 630 approaches 90 degrees.

In other words, as the angle formed between the first inclined surface 621-1 and the plane 630 approaches 90 degrees, the bending moment of the first embossed portion 621 increases, thereby more effectively preventing the vent 600 including the first embossed portion 621 from bending.

Similarly, as the angle formed between the second inclined surface 621-2 and the plane 630 approaches 90 degrees, the bending moment of the first embossed portion 621 increases, thereby more effectively preventing the vent 600 including the first embossed portion 621 from bending.

On the other hand, the first embossed portion 621 may be formed to have various shapes along the longitudinal direction of the vent 600.

For example, as shown in FIG. 3, the first embossed portion 621 may be formed to be parallel to the first groove 611.

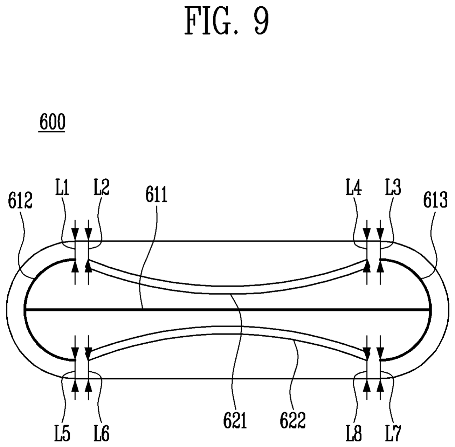

FIG. 9 is a plan view of a vent including an embossed portion formed such that a distance from a first groove increases with increasing distance from the center of the vent.

In another example, as shown in FIG. 9, the first embossed portion 621 may be formed such that, among transverse distances between the first embossed portion 621 and the first groove 611, a transverse distance between the first embossed portion 621 and the center of the vent 600 is the shortest.

In addition, as shown in FIG. 9, the first embossed portion 621 may be formed such that the transverse distance between the first embossed portion 621 and the first groove 611 increases from the center of the vent 600 toward the first longitudinal end and the second longitudinal end of the vent 600.

In this case, the first embossed portion 621 may be shaped to more effectively prevent the vent 600 from bending when the second groove 612 and third groove 613 of the notch 610 are ruptured.

Specifically, referring to FIG. 9, the first embossed portion 621 may be formed such that the shortest distance L1 between the first transverse end of the vent 600 and the second groove 612 is equal to the shortest distance L2 between the first transverse end of the vent 600 and the first longitudinal end of the first embossed portion 621.

Furthermore, the first embossed portion 621 may be formed such that the shortest distance L3 between the first transverse end of the vent 600 and the third groove 613 is equal to the shortest distance L4 between the first transverse end of the vent 600 and the second longitudinal end of the first embossed portion 621.

When the first embossed portion 621 is shaped as described above, a portion adjacent to the first end of the vent 600 and positioned between the first groove 611 and the second groove 612 and a portion positioned between the first groove 611 and the third groove 613 are more effectively prevented from bending, thereby more effectively preventing the vent 600 from bending when the second groove 612 and the third groove 613 are ruptured together with the first groove 611.

Next, the second embossed portion 622 will be described.

The second embossed portion 622 may be formed between the first groove 611 and the second transverse end of the vent 600.

As shown in FIG. 5, the second embossed portion 622 may include a third inclined surface 622-1 that has a first side connected to the second surface of the vent 600 and is positioned adjacent to the first groove 611, and a fourth inclined surface 622-2 that has a first side connected to the third inclined surface 622-1 and a second side connected to the second surface of the vent 600 and is positioned farther from the first groove 611 than the third inclined surface 622-1.

In this case, the third inclined surface 622-1 and fourth inclined surface 622-2 of the second embossed portion 622 may be formed to effectively prevent the second embossed portion 622 from bending, thereby effectively preventing the vent 600 from bending.

Specifically, the third inclined surface 622-1 and the fourth inclined surface 622-2 may be formed such that a distance between the first side and the second side of the third inclined surface 622-1 is different from a distance between the first side and the second side of the fourth inclined surface 622-2.

In other words, the second embossed portion 622 may be formed such that the two sides thereof are not symmetrical to each other with respect to the grooves.

As such, when the lengths of the third inclined surface 622-1 and the fourth inclined surface 622-2 are different, the bending moment of the second embossed portion 622 is increased, just as the bending moment of the first embossed portion 621 increases when the lengths of the first inclined surface 621-1 and the second inclined surface 621-2 are different.

In other words, when the lengths of the third inclined surface 622-1 and the fourth inclined surface 622-2 are different, the bending moment of the second embossed portion 622 increases, and the vent 600 including the second embossed portion 622 can be effectively prevented from bending.

Additionally, the third inclined surface 622-1 and the fourth inclined surface 622-2 of the second embossed portion 622 may be formed to more effectively prevent the second embossed portion 622 from bending, thereby more effectively preventing the vent 600 from bending.

Specifically, as shown in FIG. 7, the third inclined surface 622-1 and the fourth inclined surface 622-2 may be formed such that an angle formed between the third inclined surface 622-1 and the plane 630 parallel to the second surface of the vent 600 or an angle formed between the fourth inclined surface 622-2 and the plane 630 is 90 degrees.

In other words, the third inclined surface 622-1 and the fourth inclined surface 622-2 may have different lengths, but may be formed such that an angle formed between either one thereof and the plane 630 is a right angle.

As such, when the third inclined surface 622-1 or the fourth inclined surface 622-2 is at a right angle to the plane 630, the bending moment of the second embossed portion 622 increases, just as the bending moment of the first embossed portion 621 increases when the first inclined surface 621-1 or the second inclined surface 621-2 is at a right angle to the plane 630.

That is, as the angle between the third inclined surface 622-1 or the fourth inclined surface 622-2 and the plane 630 approaches 90 degrees, the bending moment of the second embossed portion 622 increases, thereby more effectively preventing the vent 600 including the second embossed portion 622 from bending.

On the other hand, the second embossed portion 622 may be formed to have various shapes along the longitudinal direction of the vent 600.

For example, as shown in FIG. 3, the second embossed portion 622 may be formed to be parallel to the first groove 611.

In another example, as shown in FIG. 9, the second embossed portion 622 may be formed such that, among transverse distances between the second embossed portion 622 and the first groove 611, a transverse distance between the second embossed portion 622 and the center of the vent 600 is the shortest.

In addition, as shown in FIG. 9, the second embossed portion 622 may be formed such that the transverse distance between the second embossed portion 622 and the first groove 611 increases from the center of the vent 600 toward the first longitudinal end and the second longitudinal end of the vent 600.

In this case, the second embossed portion 622 may be shaped to more effectively prevent the vent 600 from bending when the second groove 612 and third groove 613 of the notch 610 are ruptured.

Specifically, referring to FIG. 9, the second embossed portion 622 may be formed such that the shortest distance L5 between the second transverse end of the vent 600 and the second groove 612 is equal to the shortest distance L6 between the second transverse end of the vent 600 and the first longitudinal end of the second embossed portion 622.

Furthermore, the second embossed portion 622 may be formed such that the shortest distance L7 between the second transverse end of the vent 600 and the third groove 613 is equal to the shortest distance L8 between the second transverse end of the vent 600 and the second longitudinal end of the second embossed portion 622.

When the second embossed portion 622 is shaped as described above, a portion adjacent to the second end of the vent 600 and positioned between the first groove 611 and the second groove 612 and a portion located between the first groove 611 and the third groove 613 are more effectively prevented from bending, thereby more effectively preventing the vent 600 from bending when the second groove 612 and the third groove 613 are ruptured together with the first groove 611.

Meanwhile, the first embossed portion 621 and the second embossed portion 622 of the anti-bending portion 620 may be formed to be symmetrical to each other with respect to the first groove 611, and the second groove 612 and the third groove 613 of the notch 610 may be formed to be symmetrical to each other with respect to the center of the vent 600.

Below, a secondary battery according to another embodiment of the present disclosure will be described.

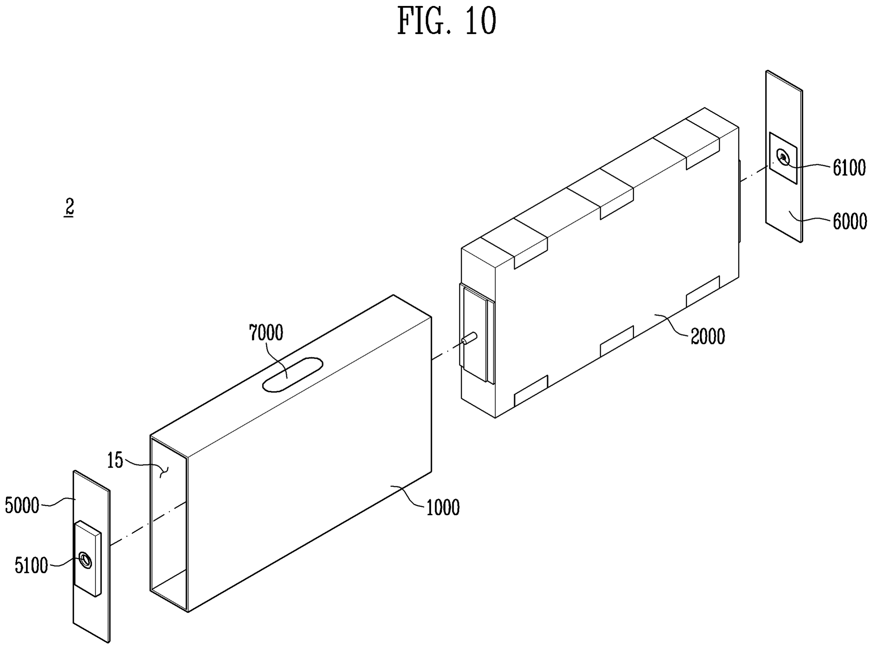

FIG. 10 is a perspective view of a secondary battery according to another embodiment of the present disclosure.

Referring to FIG. 10, a secondary battery 2 includes a case 1000, an electrode assembly 2000, a positive electrode plate, a negative electrode plate, a first cap assembly 5000, a second cap assembly 6000, and a vent 7000.

As shown in FIG. 10, the case 1000 may be open on a first side and a second side, and may have an accommodating space 15 formed therein.

Further, a vent hole may be formed in the case 1000.

The case 1000 may form the outer appearance of the secondary battery 2, and may be shaped like a prism, a pouch, or the like, but the configuration of the case 1000 is not limited thereto.

Next, the electrode assembly 2000 will be described.

The electrode assembly 2000 may be accommodated in the accommodating space 15 and may include a positive electrode, a negative electrode, and a separator disposed between the positive electrode and the negative electrode.

The electrode assembly 2000 is configured identically to the electrode assembly 200 of the secondary battery 1 described above, except that a positive electrode uncoated portion or positive electrode tab is disposed to be exposed to the first open side of the case 1000 and a negative electrode uncoated portion or negative electrode tab is disposed to be exposed to the second open side of the case 1000, and thus repetitive descriptions thereof will be avoided.

Next, the positive electrode plate will be described.

The positive electrode plate may be electrically connected to the positive electrode.

Specifically, the positive electrode plate may be coupled to and electrically connected to the positive electrode uncoated portion or positive electrode tab exposed on the first side of the case 1000. In this case, the positive electrode plate may be made of copper or a copper alloy, but the configuration of the positive electrode plate is not limited thereto.

Next, the negative electrode plate will be described.

The negative electrode plate may be electrically connected to the negative electrode.

Specifically, the negative electrode plate may be coupled to and electrically coupled to and electrically connected to the negative electrode uncoated portion or negative electrode tab exposed on the second side of the case 1000. In this case, the negative electrode plate may be made of aluminum or an aluminum alloy, but the composition of the negative electrode plate is not limited thereto.

Next, the first cap assembly 5000 will be described.

The first cap assembly 5000 may be coupled to the first side of the case 1000, may include a positive electrode terminal 5100 electrically connected to the positive electrode, and a vent hole formed therein.

The positive electrode terminal 5100 may be formed of metal and may be electrically connected to the positive electrode plate.

As such, when the positive electrode terminal 5100 is electrically connected to the positive electrode plate, the positive electrode terminal 5100 may be electrically connected to the positive electrode.

Further, the first cap assembly 5000 may have a first inlet formed for injecting the electrolyte into the accommodating space 15, and the first inlet may be coupled with a plug or the like to seal the accommodating space 15.

Next, the second cap assembly 6000 will be described.

The second cap assembly 6000 may be coupled to the second side of the case 1000, and may include a negative electrode terminal 6100 electrically connected to the negative electrode, and a vent hole formed therein.

Further, the second cap assembly 6000 may have a second inlet formed for injecting electrolyte into the accommodating space 15, and the second inlet may be coupled with a plug or the like to seal the accommodating space 15.

At least one vent hole may be formed in the case 1000, the first cap assembly 5000, or the second cap assembly 6000, but preferably a single vent hole is formed in the secondary battery 2.

That is, the vent hole may be formed in the case 1000, the first cap assembly 5000, or the second cap assembly 6000.

The negative electrode terminal 6100 may be formed of metal and may be electrically connected to the negative electrode plate.

As such, when the negative electrode terminal 6100 is electrically connected to the negative electrode plate, the negative electrode terminal 6100 may be electrically connected to the negative electrode.

The vent hole refers to a hole that may be configured to provide communication between the accommodating space 15 and the outside of the accommodating space 15.

The vent 7000 (to be described later) may be coupled to the vent hole to seal the accommodating space 15.

Next, the vent 7000 will be described.

The configuration of the vent 7000 is the same as that of the vent 600 in the secondary battery 1 described above, and thus repetitive descriptions thereof will be avoided.

As described above, a secondary battery according to the disclosure includes an anti-bending portion to prevent a vent from bending when the vent is ruptured to form an opening for discharging gas, thereby providing an effect of allowing the opening for the gas discharge to be formed to have a required size.

Furthermore, the gas can be effectively discharged, thereby providing an effect of reliably preventing the occurrence of a fire.

It is understood by those skilled in the art that the plurality of exemplary embodiments described above are specific examples of the following aspects.

Aspect 1. A secondary battery comprising: a case open on at least one of a first side or a second side and comprising an accommodating space formed therein; an electrode assembly accommodated in the accommodating space and comprising a positive electrode, a negative electrode, and a separator disposed between the positive electrode and the negative electrode; and a cap assembly coupled to the case to seal the accommodating space, and comprising a positive electrode terminal electrically connected to the positive electrode, and a negative electrode terminal electrically connected to the negative electrode, wherein a vent hole is formed in the case or the cap assembly, and a vent, which is configured to rupture upon a pressure in the accommodating space exceeding a predetermined reference pressure, is coupled to the vent hole, the vent comprising: a notch formed by forming a groove having a first shape on at least a portion of a first surface facing the accommodating space or a second surface opposite to the first surface; and an anti-bending portion formed by being recessed such that at least a portion of the second surface has a second shape.

Aspect 2. The secondary battery of aspect 1, wherein the case is open on the first side and the second side, and the cap assembly comprises: a first cap assembly coupled to the first side of the case and comprising a positive electrode terminal electrically connected to the positive electrode; and a second cap assembly coupled to the second side of the case and comprising a negative electrode terminal electrically connected to the negative electrode.

Aspect 3. The secondary battery of aspect 1 or 2, wherein the vent is formed extending in a longitudinal direction, the notch comprises a first groove formed extending in a direction parallel to the longitudinal direction, and the first groove is formed to pass through the center of the vent, which is midway between a first longitudinal end and a second longitudinal end of the vent in the longitudinal direction of the vent, and midway between a first transverse end and a second transverse end of the vent in a transverse direction of the vent.

Aspect 4. The secondary battery of aspect 3, wherein wherein the anti-bending portion comprises: a first embossed portion formed between the first groove and the first transverse end of the vent; and a second embossed portion formed between the first groove and the second transverse end of the vent.

Aspect 5. The secondary battery of aspect 4, wherein the first embossed portion comprises a first inclined surface that has a first side connected to the second surface of the vent and is positioned adjacent to the first groove; and a second inclined surface that has a first side connected to a second side of the first inclined surface and a second side connected to the second surface of the vent and is positioned farther from the first groove than the first inclined surface, and the second embossed portion comprises a third inclined surface that has a first side connected to the second surface of the vent and is positioned adjacent to the first groove; and a fourth inclined surface that has a first side connected to the third inclined surface and a second side connected to the second surface of the vent and is positioned farther from the first groove than the third inclined surface.

Aspect 6. The secondary battery of aspect 5, wherein a distance between the first side and the second side of the first inclined surface is different from a distance between the first side and the second side of the second inclined surface, and a distance between the first side and the second side of the third inclined surface is different from a distance between the first side and the second side of the fourth inclined surface.

Aspect 7. The secondary battery of aspect 5 or 6, wherein an angle formed between the first inclined surface and a plane parallel to the second surface of the vent or an angle formed between the second inclined surface and the plane is 90 degrees, and an angle formed between the third inclined surface and the plane or an angle formed between the fourth inclined surface and the plane is 90 degrees.

Aspect 8. The secondary battery of any one of aspects 5 to 7, wherein the first embossed portion and the second embossed portion are formed to be parallel to the first groove.

Aspect 9. The secondary battery of any one of aspects 5 to 8, wherein the first embossed portion is formed such that, among transverse distances between the first embossed portion and the first groove, a transverse distance between the first embossed portion and the center of the vent is the shortest, and the second embossed portion is formed such that, among transverse distances between the second embossed portion and the first groove, a transverse distance between the second embossed portion and the center of the vent is the shortest.

Aspect 10. The secondary battery of any one of aspects 5 to 9, wherein the first embossed portion is formed such that the transverse distance between the first embossed portion and the first groove increases from the center of the vent toward the first longitudinal end and the second longitudinal end of the vent, and the second embossed portion is formed such that the transverse distance between the second embossed portion and the first groove increases from the center of the vent toward the first longitudinal end and the second longitudinal end of the vent.

Aspect 11. The secondary battery of aspect 8, wherein the notch further comprises: a second groove formed adjacent to an outer periphery of the first longitudinal end of the vent; and a third groove formed adjacent to an outer periphery of the second longitudinal end of the vent.

Aspect 12. The secondary battery of aspect 11, wherein the second groove is connected to the first groove and formed parallel to the outer periphery of the first longitudinal end of the vent, and the third groove is connected to the first groove and formed parallel to the outer periphery of the second longitudinal end of the vent.

Aspect 13. The secondary battery of aspect 11 or 12, wherein the first embossed portion is formed such that the shortest distance between the first transverse end of the vent and the second groove is equal to the shortest distance between the first transverse end of the vent and the first longitudinal end of the first embossed portion, the first embossed portion is formed such that the shortest distance between the first transverse end of the vent and the third groove is equal to the shortest distance between the first transverse end of the vent and the second longitudinal end of the first embossed portion, the second embossed portion is formed such that the shortest distance between the second transverse end of the vent and the second groove is equal to the shortest distance between the second transverse end of the vent and the first longitudinal end of the second embossed portion, and the second embossed portion is formed such that the shortest distance between the second transverse end of the vent and the third groove is equal to the shortest distance between the second transverse end of the vent and the second longitudinal end of the second embossed portion.

Aspect 14. The secondary battery of any one of aspect s 11 to 13, wherein the first embossed portion and the second embossed portion are formed to be symmetrical to each other with respect to the first groove, and the second groove and the third groove are formed to be symmetrical to each other with respect to the center of the vent.

The foregoing description of the present disclosure is for illustrative purposes only, and a person having ordinary skill in the art to which the present disclosure pertains will understand that the present disclosure can be easily modified into other specific forms without changing the technical spirit or essential features thereof. It should therefore be understood that the embodiments described above are exemplary in all respects and not restrictive. For example, each component described as a single unit may be implemented in a distributed manner, and similarly, components described as being distributed may be implemented in a combined form.

The scope of the present disclosure is defined by the appended claims rather than the foregoing detailed description, and all changes or modifications derived from the meaning and scope of the claims and their equivalents should be construed as being included in the scope of the present disclosure.

## Claims

1. A secondary battery comprising:
a case open on at least one of a first side or a second side and comprising an accommodating space formed therein;
an electrode assembly accommodated in the accommodating space and comprising a positive electrode, a negative electrode, and a separator disposed between the positive electrode and the negative electrode; and
a cap assembly coupled to the case to seal the accommodating space, and comprising a positive electrode terminal electrically connected to the positive electrode, and a negative electrode terminal electrically connected to the negative electrode, wherein
a vent hole is formed in the case or the cap assembly, and
a vent, which is configured to rupture upon a pressure in the accommodating space exceeding a predetermined reference pressure, is coupled to the vent hole,
the vent comprising:
a notch formed by forming a groove having a first shape on at least a portion of a first surface facing the accommodating space or a second surface opposite to the first surface; and
an anti-bending portion formed by being recessed such that at least a portion of the second surface has a second shape.

2. The secondary battery of claim 1, wherein the case is open on the first side and the second side, and
the cap assembly comprises: a first cap assembly coupled to the first side of the case and comprising a positive electrode terminal electrically connected to the positive electrode; and a second cap assembly coupled to the second side of the case and comprising a negative electrode terminal electrically connected to the negative electrode.

3. The secondary battery of claim 1 or 2, wherein the vent is formed extending in a longitudinal direction,
the notch comprises a first groove formed extending in a direction parallel to the longitudinal direction, and
the first groove is formed to pass through the center of the vent, which is midway between a first longitudinal end and a second longitudinal end of the vent in the longitudinal direction of the vent, and midway between a first transverse end and a second transverse end of the vent in a transverse direction of the vent.

4. The secondary battery of claim 3, wherein wherein the anti-bending portion comprises:
a first embossed portion formed between the first groove and the first transverse end of the vent; and
a second embossed portion formed between the first groove and the second transverse end of the vent.

5. The secondary battery of claim 4, wherein the first embossed portion comprises
a first inclined surface that has a first side connected to the second surface of the vent and is positioned adjacent to the first groove; and
a second inclined surface that has a first side connected to a second side of the first inclined surface and a second side connected to the second surface of the vent and is positioned farther from the first groove than the first inclined surface, and
the second embossed portion comprises
a third inclined surface that has a first side connected to the second surface of the vent and is positioned adjacent to the first groove; and
a fourth inclined surface that has a first side connected to the third inclined surface and a second side connected to the second surface of the vent and is positioned farther from the first groove than the third inclined surface.

6. The secondary battery of claim 5, wherein a distance between the first side and the second side of the first inclined surface is different from a distance between the first side and the second side of the second inclined surface, and
a distance between the first side and the second side of the third inclined surface is different from a distance between the first side and the second side of the fourth inclined surface.

7. The secondary battery of claim 5 or 6, wherein an angle formed between the first inclined surface and a plane parallel to the second surface of the vent or an angle formed between the second inclined surface and the plane is 90 degrees, and
an angle formed between the third inclined surface and the plane or an angle formed between the fourth inclined surface and the plane is 90 degrees.

8. The secondary battery of any one of claims 5 to **7,** wherein the first embossed portion and the second embossed portion are formed to be parallel to the first groove.

9. The secondary battery of any one of claims 5 to 8, wherein the first embossed portion is formed such that, among transverse distances between the first embossed portion and the first groove, a transverse distance between the first embossed portion and the center of the vent is the shortest, and
the second embossed portion is formed such that, among transverse distances between the second embossed portion and the first groove, a transverse distance between the second embossed portion and the center of the vent is the shortest.

10. The secondary battery of any one of claims 5 to 9, wherein the first embossed portion is formed such that the transverse distance between the first embossed portion and the first groove increases from the center of the vent toward the first longitudinal end and the second longitudinal end of the vent, and
the second embossed portion is formed such that the transverse distance between the second embossed portion and the first groove increases from the center of the vent toward the first longitudinal end and the second longitudinal end of the vent.

11. The secondary battery of claim 8, wherein the notch further comprises:
a second groove formed adjacent to an outer periphery of the first longitudinal end of the vent; and
a third groove formed adjacent to an outer periphery of the second longitudinal end of the vent.

12. The secondary battery of claim 11, wherein the second groove is connected to the first groove and formed parallel to the outer periphery of the first longitudinal end of the vent, and
the third groove is connected to the first groove and formed parallel to the outer periphery of the second longitudinal end of the vent.

13. The secondary battery of claim 11 or 12, wherein the first embossed portion is formed such that the shortest distance between the first transverse end of the vent and the second groove is equal to the shortest distance between the first transverse end of the vent and the first longitudinal end of the first embossed portion,
the first embossed portion is formed such that the shortest distance between the first transverse end of the vent and the third groove is equal to the shortest distance between the first transverse end of the vent and the second longitudinal end of the first embossed portion,
the second embossed portion is formed such that the shortest distance between the second transverse end of the vent and the second groove is equal to the shortest distance between the second transverse end of the vent and the first longitudinal end of the second embossed portion, and
the second embossed portion is formed such that the shortest distance between the second transverse end of the vent and the third groove is equal to the shortest distance between the second transverse end of the vent and the second longitudinal end of the second embossed portion.

14. The secondary battery of any one of claims 11 to 13, wherein the first embossed portion and the second embossed portion are formed to be symmetrical to each other with respect to the first groove, and
the second groove and the third groove are formed to be symmetrical to each other with respect to the center of the vent.
